# EUROPEAN PATENT APPLICATION

(11) **EP 4 468 473 A1**
(43) Date of publication of application: **27.11.2024**
(21) Application number: 23215420.3
(22) Date of filing: 11.12.2023
(51) Int. Cl.: H01M 50/152, H01M 50/342, H01M 50/559, H01M 50/531, H01M 50/107, H01M 50/538, H01M 10/04, H01M 50/166

(54) **CYLINDRICAL BATTERY AND BATTERY ASSEMBLY**

(30) Priority: 22.05.2023 CN 202321257274 U
(71) Applicant: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Intelligent Innovation Dynamics Technology (Shanghai) Ltd., Shanghai 201315 (CN)
(72) Inventor: QIAN, Jia, Jiangyin City, Wuxi City, 214443 (CN); CHE, Peipei, Jiangyin City, Wuxi City, 214443 (CN)
(74) Representative: Becker, Eberhard

(57) **Abstract**

A cylindrical battery, a battery assembly, and an electrical apparatus are provided. The cylindrical battery includes a casing (3), a cell (4), and a current-collecting plate (5, 5', 5"). One end wall (32, 33) of the casing (3) is formed with a discharge zone (331) to form a weakened end wall. An orthographic projection of the discharge zone (331) towards the current-collecting plate (5, 5', 5") overlaps at least a portion of the current-collecting plate (5, 5', 5"). The current-collecting plate (5, 5', 5") includes at least one extension portion (51) extending from a circumferential outer edge of the weakened end wall to within a range of the orthographic projection, and within the range of the orthographic projection, the extension portion (51) is configured to be adapted to be folded away from the corresponding end portion of the cell (4).

## Description

### BACKGROUND

### Technical Field

The disclosure relates to the field of new energy vehicles, and in particular, to a cylindrical battery. The disclosure further relates to a battery assembly including the cylindrical battery.

### Description of Related Art

Generally, new energy vehicles are equipped with batteries to power the vehicles. Cylindrical batteries are widely applied due to their small sizes and adaptability to irregular installation spaces.

At present, a conventional cylindrical battery includes a casing, a cylindrical cell disposed in the casing, and a current-collecting plate disposed between an end wall of the casing and a corresponding end surface of the cell. Further, an explosion-proof valve is formed on one or both end walls of the casing, so that when thermal runaway occurs in the battery, the explosion-proof valve is opened to discharge the internal substances of the battery.

In the related art, the current-collecting plate is designed to have a larger area most of the time. This results in that when thermal runaway occurs in the battery, even if the explosion-proof valve is successfully opened, the current-collecting plate will still greatly hinder the discharge of the internal substances of the battery, and the safety of the battery is thus decreased.

### SUMMARY

In view of the above technical problems, the first aspect of the disclosure provides a cylindrical battery. The cylindrical battery includes a casing, a cylindrical cell, and a current-collecting plate. The casing includes a cylindrical circumferential side wall and two end walls, and at least one of the end walls is formed with a discharge zone to form a weakened end wall. The cell is disposed in the casing, and two end portions of the cell correspond to the two end walls. The current-collecting plate is disposed between the weakened end wall and the corresponding end portion of the cell. An orthographic projection of the discharge zone towards the current-collecting plate overlaps at least a portion of the current-collecting plate. The current-collecting plate includes at least one extension portion electrically connected to the corresponding end portion of the cell. The at least one extension portion extends from a circumferential outer edge of the weakened end wall to within a range of the orthographic projection, and within the range of the orthographic projection, the at least one extension portion is configured to be adapted to be folded away from the corresponding end portion of the cell.

In an embodiment, a plurality of extension portions are provided, and the plurality of extension portions are disposed along a circumferential direction of the weakened end wall.

In an embodiment, within the range of the orthographic projection, the plurality of extension portions are spaced apart from one another.

In an embodiment, within the range of the orthographic projection, adjacent ones of the extension portions are connected by first weakened portions.

In an embodiment, a second weakened portion is disposed on each extension portion, and the second weakened portion extends along the circumferential direction of the weakened end wall.

In an embodiment, the second weakened portion is close to an outer end of the extension portion.

In an embodiment, the current-collecting plate further includes connection portions connected among adjacent ones of the extension portions, and the connection portions are outside the orthographic projection.

In an embodiment, the current-collecting plate further includes a plurality of installation portions. The plurality of installation portions extend from the connection portions towards the circumferential side wall of the casing and are connected to the circumferential side wall of the casing.

In an embodiment, the portion of the current-collecting plate within the range of the orthographic projection occupies less than 85% of an area of the orthographic projection.

In an embodiment, the discharge zone is circular and is located in a middle portion of the weakened end wall. A ratio of a diameter of the discharge zone to a diameter of the weakened end wall is between 0.3 and 0.9.

In an embodiment, the ratio of the diameter of the discharge zone to the diameter of the weakened end wall is between 0.4 and 0.65. The portion of the current-collecting plate within the range of the orthographic projection occupies more than 10% and less than 50% of an area of the orthographic projection.

In an embodiment, the weakened end wall is formed with a notch, and the notch defines the discharge zone.

In an embodiment, the cell includes a plurality of electrode sheets wound together. Edge portions of the plurality of electrode sheets corresponding to the weakened end wall are stacked to form tabs. The plurality of extension portions have welding zones to be welded and connected to corresponding ones of the tabs.

In an embodiment, a distance from an outer edge of each welding zone to a central axis of the cell is R1, and a distance from an inner edge of the welding zone to the central axis of the cell is R2, where a difference between R1 and R2 is between 5mm and 15mm, R1≤20mm, and R2≥6mm.

The second aspect of the disclosure provides a battery assembly. The battery assembly includes the cylindrical battery as described above.

Beneficial effects of the disclosure includes the following: According to the cylindrical battery of the disclosure, within the range of the orthographic projection of the discharge zone towards the current-collecting plate, the extension portions are adapted to be folded away from the corresponding end portions of the cell. In this way, when thermal runaway occurs in the cylindrical battery, under the impact of the internal substances of the cylindrical battery, the extension portions are fold away from the corresponding end portions of the cell, so that the blocking of the discharge of the internal substances of the cylindrical battery is decreased. In this way, the cylindrical battery is prevented from exploding, and the safety of the cylindrical battery is thus improved.

### BRIEF DESCRIPTION OF THE DRAWINGS

The drawings described herein are used to provide a further understanding of the disclosure, and constitute a part of the disclosure. The exemplary embodiments of the disclosure and the description thereof are used to explain the disclosure, and do not constitute an improper limitation of the disclosure. In the drawings:
FIG. 1A schematically illustrates a vehicle according to an embodiment of the disclosure.
FIG. 1B schematically illustrates a battery assembly according to an embodiment of the disclosure.
FIG. 2 schematically illustrates a cylindrical battery according to an embodiment of the disclosure.
FIG. 3A schematically illustrates a negative electrode-side end wall of the cylindrical battery, and a form of notch is formed on the negative electrode-side end wall.
FIG. 3B is a cross-sectional view of FIG. 3A.
FIG. 4 is a schematic view illustrating a positional relationship between a negative electrode-side end portion of a cell and a corresponding current-collecting plate, and a circumferential side wall and the negative electrode-side end wall of the cylindrical battery are both omitted in the figure.
FIG. 5 schematically illustrates another form of notch on the negative electrode-side end wall.
FIG. 6 schematically illustrates a current-collecting plate of the first embodiment.
FIG. 7 schematically illustrates a current-collecting plate of the second embodiment.
FIG. 8 schematically illustrates a current-collecting plate of the third embodiment.

### DESCRIPTION OF THE EMBODIMENTS

In order to make the purpose, technical solutions, and advantages of the disclosure clearer, the technical solutions of the disclosure will be clearly and completely described in the following paragraphs together with specific embodiments and corresponding drawings of the disclosure. Obviously, the described embodiments are merely part of the embodiments, rather then all of the embodiments, of the disclosure. Based on the embodiments in the disclosure, all other embodiments obtained by a person having ordinary skill in the art without making any creative effort shall fall within the protection scope of the disclosure.

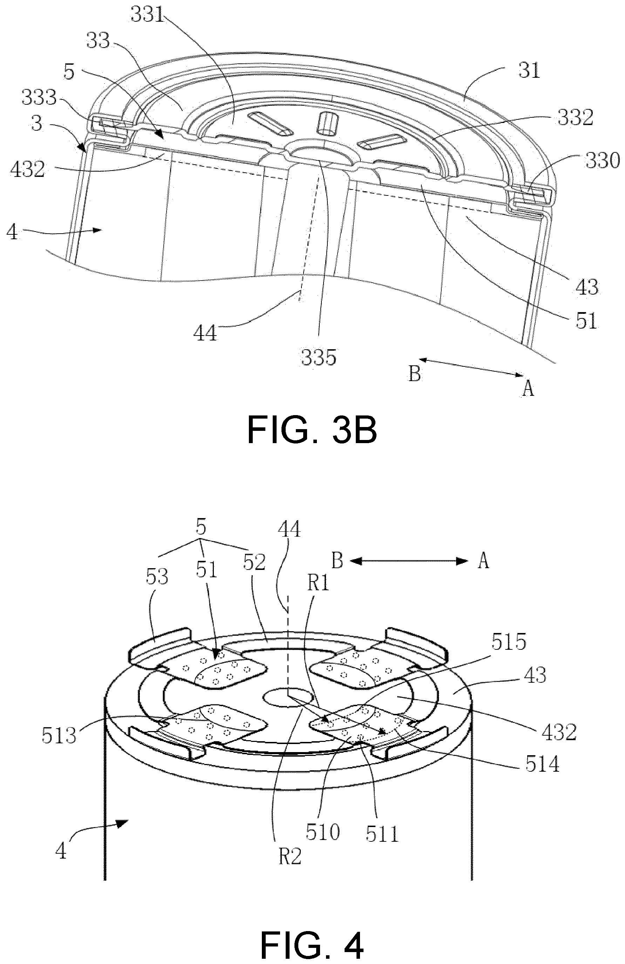

In the disclosure, the term "outside" refers to a direction pointing to the outside of the cylindrical battery in the radial direction of the cylindrical battery (the direction of arrow A in FIG. 4), and the term "inside" refers to a direction pointing towards the inside of the cylindrical battery in the radial direction of the cylindrical battery (the direction of arrow B in FIG. 4).

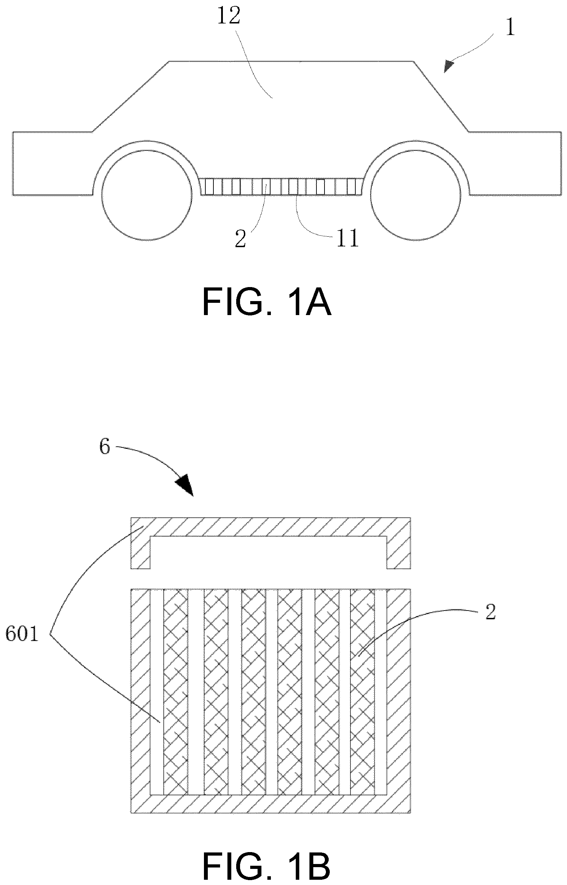

FIG. 1A schematically illustrates a vehicle 1 according to an embodiment of the disclosure, and the vehicle 1 acts as an example of an electrical apparatus of the disclosure. As shown in FIG. 1A, the vehicle 1 includes a chassis 11 and a cabin 12 installed on the chassis 11. A plurality of cylindrical batteries 2 are mounted on the chassis 11. The cylindrical batteries 2 are used to power the vehicle 1.

FIG. 1B schematically illustrates a battery assembly 6 according to an embodiment of the disclosure. In an embodiment, the battery assembly 6 is a battery module formed by the plurality of cylindrical batteries 2 connected in series and/or in parallel, a battery pack assembled from a plurality of battery modules, or a battery pack directly assembled from the plurality of cylindrical batteries 2. Optionally, the battery assembly 6 may also include a casing 601 to accommodate these cylindrical batteries 2. The battery assembly 6 generally has a main positive and negative output electrode, through which the electrical apparatus is provided with electrical energy.

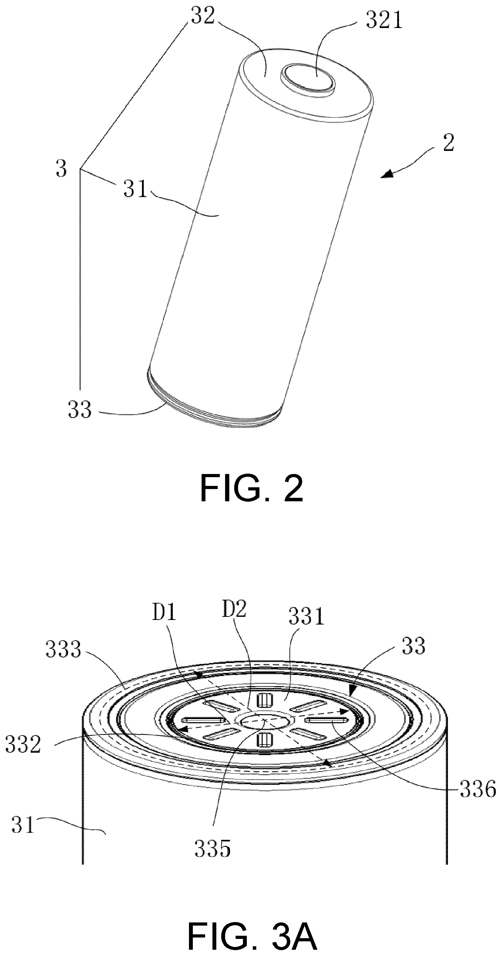

Description of the cylindrical batteries 2 is provided in the following paragraphs according to FIG. 2 to FIG. 8.

As shown in FIG. 2, FIG. 3A, and FIG. 3B, the cylindrical battery 2 includes a casing 3, a cylindrical cell 4, and a current-collecting plate 5.

To be specific, as shown in FIG. 2, the casing 3 includes a cylindrical circumferential side wall 31, a positive electrode-side end wall 32, and a negative electrode-side end wall 33. A discharge zone 331 is formed on the negative electrode-side end wall 33 (as shown in FIG. 3A), so that the negative electrode-side end wall 33 forms a weakened end wall. The strength of the discharge zone 331 is less than that of the rest of the negative electrode-side end wall 33. In this way, when thermal runaway occurs in the cylindrical battery 2, internal substances of the cylindrical battery 2 may break through the discharge zone 331 and be discharged from the cylindrical battery 2, so that the cylindrical battery 2 is prevented from exploding.

As shown in FIG. 3B, the cell 4 is disposed in the casing 3, and a negative electrode end portion 43 of the cell 4 corresponds to the negative electrode-side end wall 33, and a positive electrode end portion (not shown) corresponds to the positive electrode-side end wall 32. A current-collecting plate 5 of the first embodiment is disposed between the negative electrode-side end wall 33 and the negative electrode end portion 43. An orthographic projection of the discharge zone 331 towards the current-collecting plate 5 overlaps at least a portion of the current-collecting plate 5. The current-collecting plate 5 includes at least one extension portion 51. The extension portion 51 extends from a circumferential outer edge 333 of the negative electrode-side end wall 33 to within a range of the orthographic projection. In an embodiment, the extension portion 51 extends towards a center of the orthographic projection 335. In other embodiments, the at least one extension portion 51 may deviate from the center of the orthographic projection 335 and extend within the range of the orthographic projection.

In an embodiment, the portion of the current-collecting plate 5 (or the extension portion 51) within the range of the orthographic projection occupies less than 85% of an area of the orthographic projection. In this way, for the orthographic projection (or the discharge zone 331), the area occupied by the current-collecting plate 5 (or the extension portion 51) is smaller. When the cylindrical battery 2 discharges its internal substances (for example, when thermal runaway occurs in the cylindrical battery 2), the current-collecting plate 5 (or the extension portion 51) is less likely to block the discharge of the internal substances. This helps the internal substances of the cylindrical battery 2 to be discharged quickly, so that the cylindrical battery 2 is prevented from exploding, and the safety of the cylindrical battery 2 is improved.

In an embodiment, within the range of the orthographic projection, the extension portion 51 is configured to be adapted to be folded away from the negative electrode end portion 43 of the cell 4. In this way, when the cylindrical battery 2 discharges its internal substances, the folded extension portion 51 no longer blocks the discharge zone 331 or only slightly blocks the discharge zone 331, so there is little blocking to the internal substances discharged by the cylindrical battery 2. This further helps the internal substances of the cylindrical battery 2 to be discharged quickly, so that the safety of the cylindrical battery 2 is further improved.

In an embodiment, the positive electrode-side end wall 32 is integrally formed with the circumferential side wall 31. The negative electrode-side end wall 33 is an independent component and is sealingly connected to the circumferential side wall 31, for example, a sealing member 330 is disposed between the negative electrode-side end wall 33 and the circumferential side wall 31.

The extension portion 51 of the current-collecting plate 5 is electrically connected to the negative electrode end portion 43 of the cell 4. The extension portion 51 (or the current-collecting plate 5) is also electrically connected to the circumferential side wall 31, so that the casing 3 forms a negative electrode of the cylindrical battery 2.

A terminal 321 is disposed on the positive electrode-side end wall 32, and the terminal 321 is insulated and spaced apart from the positive electrode-side end wall 32. A current-collecting plate (not shown) is also provided between the positive electrode-side end wall 32 and the positive electrode end portion of the cell 4. The current-collecting plate on a positive electrode side is electrically connected between the positive electrode end portion of the cell 4 and the terminal 321, so that the terminal 321 forms a positive electrode of the cylindrical battery 2, which is well known to a person having ordinary skill in the art.

In another embodiment, both the positive electrode-side end wall 32 and the negative electrode-side end wall 33 are independent components, and both are sealingly connected to the circumferential side wall 31.

Optionally, the circumferential side wall 31, the positive electrode-side end wall 32, and the negative electrode-side end wall 33 are generally made of steel. In this way, the casing 3 exhibits good strength and can effectively suppress the swelling of the cell 4, and the cylindrical battery 2 itself may also be used as a support member. In other embodiments, the circumferential side wall 31, the positive electrode-side end wall 32, and the negative electrode-side end wall 33 may also be made of other metal materials, such as aluminum.

In an embodiment, as shown in FIG. 3A, a plurality of reinforcing ribs 336 are also formed on the discharge zone 331. For instance, these reinforcing ribs 336 are radially arranged around the center of the discharge zone 331. These reinforcing ribs 336 may increase the strength of the negative electrode-side end wall 33. For instance, during the assembly process of the cylindrical battery 2, these reinforcing ribs 336 help prevent the discharge zone 331 from being pressed and deformed, causing the cylindrical battery 2 to be damaged. It should be understood that other types of reinforcing structures may be formed on the discharge zone 331 and/or the entire negative electrode-side end wall 33 as needed, as long as these reinforcing structures do not block the smooth opening of the discharge zone 331.

In an embodiment, a discharge zone may also be formed on the positive electrode-side end wall 32 as needed. In this case, the current-collecting plate on the positive electrode side is the same as the current-collecting plate 5 mentioned above, so that when thermal runaway occurs in the cylindrical battery 2, the current-collecting plate on the positive electrode side is less likely to block or is prevented from blocking the discharge of internal substances of the cylindrical battery 2, so that the cylindrical battery 2 is prevented from exploding. In addition, the reinforcing ribs or other reinforcing structures as described above may also be formed on the positive electrode-side end wall 32 and/or the discharge zone of the positive electrode-side end wall 32. For simplicity, in the disclosure, description is made by taking the discharge zone 331 forming on the negative electrode-side end wall 33 as an example.

Description of the discharge zone 331 continues in the following paragraphs.

As shown in FIG. 3A, the discharge zone 331 is circular and is located in a middle portion of the negative electrode-side end wall 33. For instance, the discharge zone 331 and the negative electrode-side end wall 33 may form concentric circles, or the centers of the two may deviate slightly.

A ratio of a diameter D1 of the discharge zone 331 to a diameter D2 of the negative electrode-side end wall 33 is between 0.3 and 0.9. According to this structure, the discharge zone 331 occupies a larger area of the negative electrode-side end wall 33, so that the internal substances of the cylindrical battery 2 may be quickly discharged after the discharge zone 331 is opened. Further, this dimensional relationship between the discharge zone 331 and the negative electrode-side end wall 33 allows a radial edge region of the cylindrical battery 2 to have sufficient size to facilitate installation of the cylindrical battery 2 in the chassis 11 of the vehicle. In an embodiment, the ratio of the diameter D1 of the discharge zone 331 to the diameter D2 of the negative electrode-side end wall 33 is between 0.4 and 0.65, and the portion of the current-collecting plate 5 (or the extension portion 51) within the range of the orthographic projection occupies more than 10% and less than 50% of the area of the orthographic projection. In this way, the installation of the cylindrical battery 2 in the chassis 11 is further facilitated without affecting the discharge of the internal substances of the cylindrical battery 2.

Optionally, as shown in FIG. 3A and FIG. 3B, a notch 332 is formed on the negative electrode-side end wall 33. The notch 332 defines the discharge zone 331. In an embodiment, as shown in FIG. 3A, the notch 332 is a closed curve. For instance, the notch 332 forms a concentric circle with the circumferential outer edge 333 of the negative electrode-side end wall 33. In other embodiments, the notch 332 may also be a closed polygon. The region surrounded by the notch 332 in the shape of a closed curve forms the discharge zone 331. A thickness of the notch 332 is thinner than a thickness of the remaining portion of the negative electrode-side end wall 33, so that the strength of the notch 332 is smaller. When the internal substances of the cylindrical battery 2 are discharged, the negative electrode-side end wall 33 may be easily broken from the notch 332. The discharge zone 331 is impacted by the discharged substances and then leave the negative electrode-side end wall 33 (or the cylindrical battery 2), so that an opening is formed on the negative electrode-side end wall 33. The internal substances of the cylindrical battery 2 are smoothly discharged through the opening.

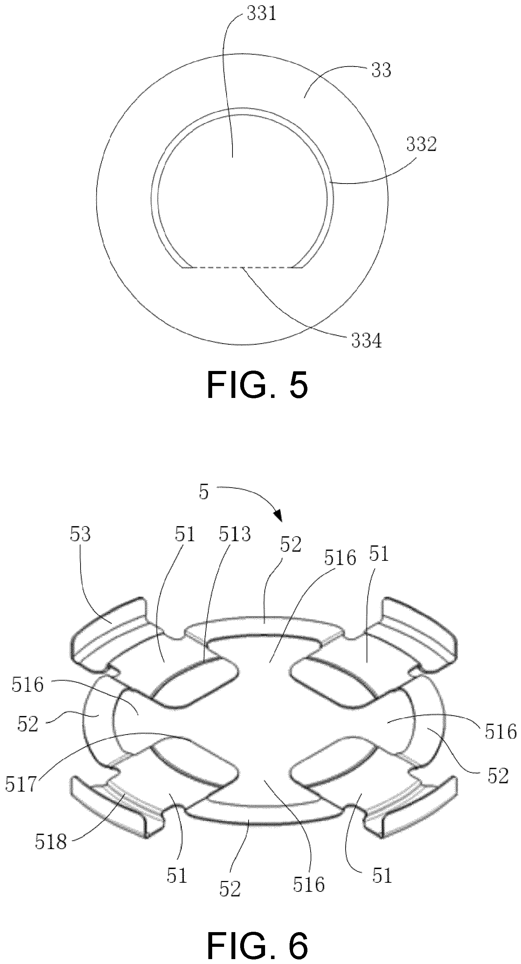

In an embodiment, as shown in FIG. 5, the notch 332 may also be a non-closed curve. For instance, the non-closed curve may be a semi-circular arc or a superior arc (that is, a circular arc with a central angle greater than 180 degrees). The region on a radially inner side of this type of notch 332 (or the closed curve) forms the discharge zone 331. In this case, the discharge zone 331 is connected to the remaining portion of the negative electrode-side end wall 33 through a non-closed portion 334 of the notch 332. After the negative electrode-side end wall 33 is broken along the notch 332, the discharge zone 331 may still be connected to the negative electrode-side end wall 33 (or the cylindrical battery 2) without flying away from the cylindrical battery 2 in an indeterminate direction, so that the safety of the cylindrical battery 2 is further improved. The same is true for other forms of non-closed curves, so description thereof is no repeated herein.

Description of the cell 4 is provided as follows.

In an embodiment, the cell 4 includes a plurality of electrode sheets (not shown) wound together. For instance, the electrode sheets include a positive electrode sheet, a negative electrode sheet, and a separator separating the positive electrode sheet and the negative electrode sheet. The positive electrode sheet, the negative electrode sheet, and the separator are stacked together and then rolled into a cylindrical cell. An edge portion of the negative electrode sheet corresponding to the negative electrode-side end wall 33 is stacked to form a negative electrode tab 432 (as shown in FIG. 3B). Certainly, an edge portion of the positive electrode sheet corresponding to the positive electrode-side end wall 32 is stacked to form a positive electrode tab (not shown). This type of cell structure is well known to a person having ordinary skill in the art, so description thereof is not repeated herein.

As shown in FIG. 4, the extension portion 51 has a welding zone 510 to be welded together with the negative electrode tab 432, so that the electrical connection between the extension portion 51 and the negative electrode tab 432 is achieved. In an embodiment, the extension portion 51 is substantially parallel to the negative electrode tab 432 to facilitate the welding operation.

In an embodiment, a plurality of welding spots 511 are provided in the welding zone 510, so that the extension portion 51 and the negative electrode tab 432 are stably welded together. In other embodiments, the welding zone 510 may also be welded over the entire surface to further improve the connection stability between the extension portion 51 and the negative electrode tab 432.

Optionally, as shown in FIG. 4, a distance from an outer edge 514 of the welding zone 510 to a central axis 44 of the cell 4 is R1, and a distance from an inner edge 515 of the welding zone 510 to the central axis 44 of the cell 4 is R2. A difference between R1 and R2 is between 5mm and 15mm, where R1≤20mm and R2≥6mm.According to this structure, a welding area (i.e., an area of the welding zone 510) of the extension portion 51 and the negative electrode tab 432 is larger, which helps to reduce a connection resistance. Besides, it can also be seen that within the value ranges of R1 and R2, a thickness of the negative electrode tab 432 corresponding to the welding zone 510 is the largest, which helps to improve the welding quality between the extension portion 51 and the negative electrode tab 432. As such, the extension portion 51 is more stably connected to the negative electrode tab 432, and the connection resistance is further reduced. It should be understood that for the case where the plurality of welding spots 511 are provided in the welding zone 510, the outer edge 514 of the welding zone 510 refers to an envelope of the outermost welding spot, and the inner edge 515 of the welding zone 510 refers to an envelope of the innermost welding spot.

Description of the current-collecting plate 5 is provided as follows.

Optionally, as shown in FIG. 6, the current-collecting plate 5 of the first embodiment includes four extension portions 51 and connection portions 52 connected among adjacent extension portions 51. In the cylindrical battery 2, these extension portions 51 are disposed along a circumferential direction of the negative electrode-side end wall 33. The connection portions 52 are integrally formed with these extension portions 51 to facilitate the assembly of the current-collecting plate 5. It should be understood that the current-collecting plate 5 may also include other numbers of extension portions 51, and the number can be determined by a person having ordinary skill in the art according to actual situation, as long as the extension portions 51 do not seriously block the discharge of internal substances of the cylindrical battery 2. It should be understood that the area of the orthographic projection occupied by the portions of these extension portions 51 within the range of the orthographic projection is still less than 85%.

As shown in FIG. 6, gaps 516 are formed among adjacent extension portions 51. These gaps 516 allow the internal substances of the cylindrical battery 2 to pass through, so that the discharge of the internal substances of the cylindrical battery 2 may be further accelerated.

Optionally, the connection portions 52 are located outside the range of the orthographic projection, so that the connection portions 52 are prevented from blocking the discharge of internal substances of the cylindrical battery 2.

Optionally, as shown in FIG. 6, the connection portions 52 and the extension portions 51 are of an integrated structure. For instance, the connection portions 52 and the extension portions 51 are stamped and formed together. In other embodiments, the connection portions 52 and the extension portions 51 may be of separate structures. For instance, the connection portions 52 are formed as a strip extending along the circumferential outer edge 333 of the negative electrode-side end wall 33, and these extension portions 51 are fixedly connected (e.g., welded) to the strip.

In an embodiment, the connection portions 52 and the extension portions 51 together form a closed shape, such as a circle (as shown in FIG. 6). In this way, during the assembly process, the connection portions 52 and the extension portions 51 interfere with each other, which helps to avoid deformation of the connection portion 5 and facilitates assembly. In other embodiments, the connection portions 52 and the extension portions 51 may also form an unclosed shape. In this way, during the assembly process, the shape of the current-collecting plate 5 may be adjusted according to the size of the negative electrode-side end wall 33 and/or the size of the negative electrode end portion 43.

Optionally, as shown in FIG. 6, within the range of the orthographic projection, the plurality of extension portions 51 are spaced apart from one another. In other words, within the range of the orthographic projection, these extension portions 51 are not directly or indirectly connected. In this way, when the internal substances of the cylindrical battery 2 are discharged, these extension portions 51 do not interfere with one another, so the extension portions 51 are easy to be folded away from the negative electrode end portion 43 of the cell 4 under the impact of the discharged substances. This helps the internal substances of the cylindrical battery 2 to be discharged quickly, so that the safety of the cylindrical battery 2 is further improved.

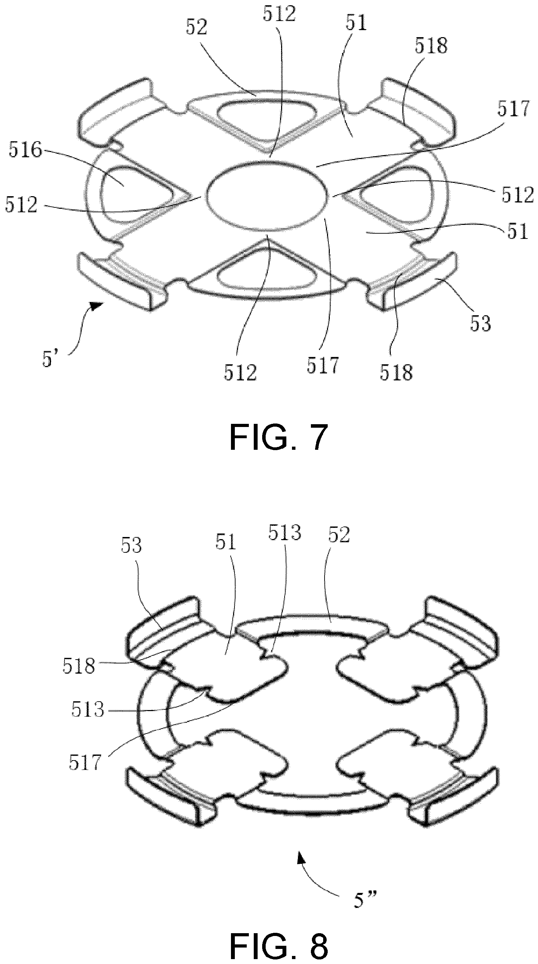

FIG. 7 schematically illustrates a current-collecting plate 5' of the second embodiment. The current-collecting plate 5' shown in FIG. 7 is similar in structure to the current-collecting plate 5 shown in FIG. 6, and main difference is that within the range of the orthographic projection, the adjacent extension portions 51 are connected by first weakened portions 512. For instance, inner ends 517 of adjacent extension portions 51 (i.e., the ends proximate the center of the discharge zone 331) are connected through the first weakened portions 512. In this way, when the current-collecting plate 5' is assembled, these extension portions 51 interferes with one another, so that the entire current-collecting plate 5' is not easily deformed, which facilitates the assembly of the current-collecting plate 5'. It should be noted that when the internal substances of the cylindrical battery 2 are discharged, the first weakened portions 512 may break due to the impact of the discharged substances due to their weak strength. In this way, these extension portions 51 are independent of one another and are further folded away from the negative electrode end portion 43 of the cell 4 by the impact of the discharged substances. As such, blocking of the discharge of the internal substances of the cylindrical battery 2 is thus decreased or avoided.

In an embodiment, each first weakened portion 512 may be configured to be thinner than each extension portion 51 to reduce its strength. In addition, through holes may also be formed on the first weakened portions 512 to further lower the strength. Certainly, other methods may also be used to reduce the strength of the first weakened portions 512 as needed.

FIG. 8 schematically illustrates a current-collecting plate 5" of the third embodiment. As shown in FIG. 6 and FIG. 8, a second weakened portion 513 is provided on each extension portion 51 of the current-collecting plate 5 and the current-collecting plate 5", and the second weakened portions 513 extend along the circumferential outer edge 333 of the negative electrode-side end wall 33. For instance, the extension portions 51 are substantially parallel to a radial direction of the negative electrode-side end wall 33, and the second weakened portions 513 are substantially parallel to the circumferential direction of the negative electrode-side end wall 33, and certainly, may deviate slightly from the circumferential direction of the negative electrode-side end wall 33. In this way, as guided by the second weakened portions 513, when the internal substances of the cylindrical battery 2 are discharged, the extension portions 51 are more likely to be impacted and folded away from the negative electrode end portion 43 of the cell 4, so that blocking of the discharge of the internal substances of the cylindrical battery 2 is thus decreased or avoided.

Optionally, each second weakened portion 513 is close to an outer end 518 of the extension portion 51. In this way, almost the entire extension portion 51 is folded away from the negative electrode end portion 43 of the cell 4 under the impact of the discharged substances, so that the influence of the extension portions 51 on the discharge of internal substances of the cylindrical battery 2 is further lowered.

In an embodiment, each second weakened portion 513 may be configured as a notch (as shown in FIG. 6). In other embodiments, the second weakened portion 513 may also be configured as a cutout on the extension portion 51 (as shown in FIG. 8) or as a through hole or a corrugated structure on the extension portion 51.

It should be understood that the second weakened portions as described above may also be formed on the extension portions 51 of the current-collecting plate 5' of the second embodiment, and description thereof is not repeated herein.

Optionally, as shown in FIG. 6 to FIG. 8, the each of the current-collecting plate 5 of the first embodiment, the current-collecting plate 5' of the second embodiment, and the current-collecting plate 5" of the third embodiment includes a plurality of installation portions 53. These installation portions 53 extend from the connection portions 52 towards the circumferential side wall 31 of the casing 3 and are connected to the circumferential side wall 31 of the casing 3. Further, the installation portions 53 may be electrically connected to the circumferential side wall 31 of the casing 3, so that the casing 3 is negatively charged.

Optionally, as also shown in FIG. 6 to FIG. 8, the installation portions 53 are aligned with the extension portions 51. In other embodiments, the installation portions 53 and the extension portions 51 may also be circumferentially staggered, depending on the actual situation.

In an embodiment, the installation portions 53 may be integrally formed with the extension portions 51 and/or the connection portions 52, for example, the installation portions 53 are portions of the extension portions 51 that extend beyond the connection portions 52. Certainly, the installation portions 53 may also be components additionally connected to the connection portions 52 or the extension portions 51, depending on the actual situation as well.

The above description presents only the embodiments of the disclosure and is not intended to limit the disclosure. For a person having ordinary skill in the art, various modifications and changes may be made to the disclosure. Any modifications, equivalent replacements, and improvements made without departing from the spirit and principles of the disclosure should fall within the protection scope of the claims of the disclosure.

### List of Reference Numerals

1: vehicle
11: chassis
12: cabin
2: cylindrical battery
3: casing
31: circumferential side wall
32: positive electrode-side end wall
321: terminal
33: negative electrode-side end wall
330: sealing member
331: discharge zone
332: notch
334: non-closed portion of the notch
333: circumferential outer edge of the negative electrode-side end wall
335: center of the orthographic projection
336: reinforcing rib
4: cell
43: negative electrode end portion
432: negative electrode tab
44: central axis of the cell
5: current-collecting plate of the first embodiment
51: extension portion
510: welding zone
511: welding spot
512: first weakened portion
513: second weakened portion
514: outer edge of the welding zone
515: inner edge of the welding zone
516: gap
517: inner end of the extension portion
518: outer end of the extension portion
52: connection portion
53: installation portion
5': current-collecting plate of the second embodiment
5": current-collecting plate of the third embodiment
6: battery assembly
601: casing
D1: diameter of discharge zone
D2: diameter of negative electrode-side end wall

## Claims

1. A cylindrical battery (2), comprising:
a casing (3) comprising a cylindrical circumferential side wall (31) and two end walls (32, 33), wherein at least one of the end walls (32, 33) is formed with a discharge zone (331) to form a weakened end wall;
a cylindrical cell (4) disposed in the casing (3), wherein two end portions of the cell (4) correspond to the two end walls (32, 33); and
a current-collecting plate (5, 5', 5") disposed between the weakened end wall and the corresponding end portion of the cell (4), wherein an orthographic projection of the discharge zone (331) towards the current-collecting plate (5, 5', 5") overlaps at least a portion of the current-collecting plate (5, 5', 5"), the current-collecting plate (5, 5', 5") comprises at least one extension portion (51) electrically connected to the corresponding end portion of the cell (4), the at least one extension portion (51) extends from a circumferential outer edge of the weakened end wall to within a range of the orthographic projection, and within the range of the orthographic projection, the at least one extension portion (51) is configured to be adapted to be folded away from the corresponding end portion of the cell (4).

2. The cylindrical battery (2) according to claim 1, wherein a plurality of extension portions (51) are provided, and the plurality of extension portions (51) are disposed along a circumferential direction of the weakened end wall.

3. The cylindrical battery (2) according to claim 2, wherein within the range of the orthographic projection, the plurality of extension portions (51) are spaced apart from one another.

4. The cylindrical battery (2) according to claim 2, wherein within the range of the orthographic projection, adjacent ones of the extension portions (51) are connected by first weakened portions (512).

5. The cylindrical battery (2) according to claim 2, wherein a second weakened portion (513) is disposed on each extension portion (51), and the second weakened portion (513) extends along the circumferential direction of the weakened end wall.

6. The cylindrical battery (2) according to claim 5, wherein the second weakened portion (513) is close to an outer end of the extension portion (51).

7. The cylindrical battery (2) according to claim 2, wherein the current-collecting plate (5, 5', 5") further comprises connection portions (52) connected among adjacent ones of the extension portions (51), and the connection portions (52) are outside the orthographic projection.

8. The cylindrical battery (2) according to claim 7, wherein the current-collecting plate (5, 5', 5") further comprises a plurality of installation portions (53), and the plurality of installation portions (53) extend from the connection portions (52) towards the circumferential side wall (31) of the casing (3) and are connected to the circumferential side wall (31) of the casing (3).

9. The cylindrical battery (2) according to claim 1, wherein the portion of the current-collecting plate (5, 5', 5") within the range of the orthographic projection occupies less than 85% of an area of the orthographic projection.

10. The cylindrical battery (2) according to claim 1, wherein the discharge zone (331) is circular and is located in a middle portion of the weakened end wall, and a ratio of a diameter of the discharge zone (331) to a diameter of the weakened end wall is between 0.3 and 0.9.

11. The cylindrical battery (2) according to claim 10, wherein the ratio of the diameter of the discharge zone (331) to the diameter of the weakened end wall is between 0.4 and 0.65, and the portion of the current-collecting plate (5, 5', 5") within the range of the orthographic projection occupies more than 10% and less than 50% of an area of the orthographic projection.

12. The cylindrical battery (2) according to claim 1, wherein the weakened end wall is formed with a notch (332), and the notch (332) defines the discharge zone (331).

13. The cylindrical battery (2) according to claim 1, wherein the cell (4) comprises a plurality of electrode sheets wound together, edge portions of the plurality of electrode sheets corresponding to the weakened end wall are stacked to form tabs (432), and the plurality of extension portions (51) have welding zones (510) to be welded and connected to corresponding ones of the tabs (432).

14. The cylindrical battery (2) according to claim 13, wherein a distance from an outer edge of each welding zone (510) to a central axis of the cell (4) is R1, and a distance from an inner edge of the welding zone (510) to the central axis of the cell (4) is R2, where a difference between R1 and R2 is between 5mm and 15mm, R1≤20mm, and R2≥6mm.

15. A battery assembly (6), comprising the cylindrical battery (2) according to any one of claims 1 to 14.

## Amended claims

### Amended claims in accordance with Rule 137(2) EPC.

1. A cylindrical battery (2), comprising:
a casing (3) comprising a cylindrical circumferential side wall (31) and two end walls (32, 33), wherein at least one of the end walls (32, 33) is formed with a discharge zone (331) to form a weakened end wall;
a cylindrical cell (4) disposed in the casing (3), wherein two end portions of the cell (4) correspond to the two end walls (32, 33); and
a current-collecting plate (5, 5', 5") disposed between the weakened end wall and the corresponding end portion of the cell (4), wherein an orthographic projection of the discharge zone (331) towards the current-collecting plate (5, 5', 5") overlaps at least a portion of the current-collecting plate (5, 5', 5"), the current-collecting plate (5, 5', 5") comprises at least one extension portion (51) electrically connected to the corresponding end portion of the cell (4), the at least one extension portion (51) extends from a circumferential outer edge of the weakened end wall to within a range of the orthographic projection, and within the range of the orthographic projection,
**characterized in that**
the at least one extension portion (51) is configured to be adapted to be folded away from the corresponding end portion of the cell (4) and electrically connected to the circumferential side wall (31).

2. The cylindrical battery (2) according to claim 1, wherein a plurality of extension portions (51) are provided, and the plurality of extension portions (51) are disposed along a circumferential direction of the weakened end wall.

3. The cylindrical battery (2) according to claim 2, wherein within the range of the orthographic projection, the plurality of extension portions (51) are spaced apart from one another.

4. The cylindrical battery (2) according to claim 2, wherein within the range of the orthographic projection, adjacent ones of the extension portions (51) are connected by weakened portions (512).

5. The cylindrical battery (2) according to claim 2, wherein a weakened portion (513) is disposed on each extension portion (51), and the weakened portion (513) extends along the circumferential direction of the weakened end wall.

6. The cylindrical battery (2) according to claim 5, wherein the weakened portion (513) is close to an outer end of the extension portion (51).

7. The cylindrical battery (2) according to claim 2, wherein the current-collecting plate (5, 5', 5") further comprises connection portions (52) connected among adjacent ones of the extension portions (51), and the connection portions (52) are outside the orthographic projection.

8. The cylindrical battery (2) according to claim 7, wherein the current-collecting plate (5, 5', 5") further comprises a plurality of installation portions (53), and the plurality of installation portions (53) extend from the connection portions (52) towards the circumferential side wall (31) of the casing (3) and are connected to the circumferential side wall (31) of the casing (3).

9. The cylindrical battery (2) according to claim 1, wherein the portion of the current-collecting plate (5, 5', 5") within the range of the orthographic projection occupies less than 85% of an area of the orthographic projection.

10. The cylindrical battery (2) according to claim 1, wherein the discharge zone (331) is circular and is located in a middle portion of the weakened end wall, and a ratio of a diameter of the discharge zone (331) to a diameter of the weakened end wall is between 0.3 and 0.9.

11. The cylindrical battery (2) according to claim 10, wherein the ratio of the diameter of the discharge zone (331) to the diameter of the weakened end wall is between 0.4 and 0.65, and the portion of the current-collecting plate (5, 5', 5") within the range of the orthographic projection occupies more than 10% and less than 50% of an area of the orthographic projection.

12. The cylindrical battery (2) according to claim 1, wherein the weakened end wall is formed with a notch (332), and the notch (332) defines the discharge zone (331).

13. The cylindrical battery (2) according to claim 1, wherein the cell (4) comprises a plurality of electrode sheets wound together, edge portions of the plurality of electrode sheets corresponding to the weakened end wall are stacked to form tabs (432), and the plurality of extension portions (51) have welding zones (510) to be welded and connected to corresponding ones of the tabs (432).

14. The cylindrical battery (2) according to claim 13, wherein a distance from an outer edge of each welding zone (510) to a central axis of the cell (4) is R1, and a distance from an inner edge of the welding zone (510) to the central axis of the cell (4) is R2, where a difference between R1 and R2 is between 5mm and 15mm, R1≤20mm, and R2≥6mm.

15. A battery assembly (6), comprising the cylindrical battery (2) according to any one of claims 1 to 14.
